# EUROPÄISCHE PATENTSCHRIFT

(11) **EP 2 157 310 B1**
(45) Veröffentlichungstag und Bekanntmachung des Hinweises auf die Patenterteilung: **04.05.2016**
(21) Anmeldenummer: 09006882.6
(22) Anmeldetag: 22.05.2009
(51) Int. Cl.: F23D 14/44, F23Q 2/28, F02M 25/12, F02P 3/12, F24H 1/10

(54) **Verfahren zur Freisetzung des Energieinhaltes von Knallgas**
Method for releasing the energy content of explosive gas
Procédé de libération du contenu énergétique de gaz détonant

(30) Priorität: 18.08.2008 DE 102008038155
(43) Veröffentlichungstag der Anmeldung: 24.02.2010
(73) Patentinhaber: ROINER, Franz, 94372 Rattiszell (DE); Roiner, Maria, 94372 Rattiszell (DE); Gensch, Henning, 30657 Hannover (DE); Gensch, Barbara, 30657 Hannover (DE)
(72) Erfinder: Roiner, Franz, 94372 Rattiszell (DE)
(74) Vertreter: Zinnecker, Armin

(56) Entgegenhaltungen:
- WO-A1-86/02987
- WO-A2-01/59295
- DE-A1-102006 007 272
- DE-B4- 10 359 509
- GB-A- 367 829
- GB-A- 491 678
- JP-A- S62 272 008
- US-A- 5 370 528
- US-A- 5 715 801
- US-A1- 2005 126 155
- US-B1- 7 340 893

## Beschreibung

Die Erfindung betrifft ein Verfahren zur Freisetzung des Energieinhaltes von Knallgas. Insbesondere betrifft die Erfindung ein Verfahren zur Freisetzung des Energieinhaltes von naszierendem bzw. originärem Knallgas. Die Erfindung betrifft ferner eine Vorrichtung zur Durchführung eines derartigen Verfahrens und einen Motor, der eine derartige Vorrichtung umfasst.

Aus der DE 103 59 509 B4 ist ein Verfahren zur Herstellung von Knallgas bekannt, bei dem Wasser elektrolytisch behandelt wird. In dem Wasser ist ein Ionenaustauscher vorhanden, dem Wasserstoff anhaftet.

Aus der US 7 340 893 B1 ist ein Dampfgenerator mit Brennern zum Verbrennen von Wasserstoff und Sauerstoff unter Wasser bekannt.

Die US 2005/126155 A1 offenbart eine ähnliche Vorrichtung.

Aus der US 5 370 528 A ist eine Vorrichtung zum Behandeln von flüssigem Müll bekannt, bei der ein tauchbarer Brenner verwendet wird, der mit Wasserstoff und Sauerstoff beheizt werden kann, die getrennt voneinander zugeführt werden.

Aufgabe der Erfindung ist es, ein verbessertes Verfahren und eine verbesserte Vorrichtung zur Freisetzung des Energieinhaltes von Knallgas vorzuschlagen.

Erfindungsgemäß wird diese Aufgabe durch die Merkmale des Anspruchs 1 gelöst. Das Knallgas, bei dem es sich um naszierendes, d.h. originäres Knallgas handelt, wird in einen mit Wasser gefüllten, explosionsgeschützten Behälter geführt, wobei das Wasser einen Wasserspiegel ausbildet. Das Knallgas wird durch eine Leitung geführt, die im Wasser unterhalb des Wasserspiegels endet. Die Leitung endet derart, dass das aus einem Ende der Leitung strömende Knallgas Blasen im Wasser bildet, die im Wasser nach oben steigen. Das Knallgas wird unterhalb des Wasserspiegels oder über dem Wasserspiegel entzündet. Über dem Wasserspiegel befindet sich ein gasförmiges Medium, insbesondere Luft. Das Knallgas kann brennen oder explodieren. Vorteilhaft ist es, wenn das Knallgas explodiert, da bei einer Explosion höhere Energien frei werden als bei einer Verbrennung.

Vorteilhafte Weiterbildungen sind in den Unteransprüchen beschrieben.

Die Entzündung des Knallgases kann durch eine Funkenstrecke erfolgen.

Insbesondere kann die Entzündung des Knallgases durch einen Piezozünder oder ein sonstiges Piezoelement erfolgen.

Nach einer weiteren vorteilhaften Weiterbildung wird das Knallgas dadurch erzeugt, dass eine Flüssigkeit elektrolytisch behandelt wird. Dabei ist es vorteilhaft, wenn in der Flüssigkeit, insbesondere Wasser, ein Ionenaustauscher vorhanden ist, dem das oder eines der herzustellenden Gase, insbesondere Wasserstoff und/oder Sauerstoff anhaftet.

Die elektrolytische Behandlung der Flüssigkeit kann insbesondere nach der DE 103 59 509 B4 durchgeführt werden. Bei diesem Verfahren wird Wasser elektrolytisch behandelt, wobei in dem Wasser ein vorzugsweise gelförmiger Ionenaustauscher vorhanden ist, dem Wasserstoff, vorzugsweise in Ionenbindung, anhaftet. Bei dem Ionenaustauscher handelt es sich vorzugsweise um einen stark sauren, gelförmigen Ionenaustauscher mit Sulfonsäuregruppen als Ankergruppen. Der Ionenaustauscher hat die allgemeine chemische Formel R-SO₃-H, wobei R eine Matrix, insbesondere eine vernetzte Polystyrol-Matrix bezeichnet, SO₃ eine Sulfonsäure-Ankergruppe und H Wasserstoff. Auch die weiteren Einzelheiten aus der DE 103 59 509 B4 oder der DE 10 2006 07 272 B4 können durchgeführt werden.

Eine erfindungsgemäße Vorrichtung zur Durchführung des erfindungsgemäßen Verfahrens umfasst einen mit Wasser, das einen Wasserspiegel ausbildet, gefüllten, explosionsgeschützten Behälter mit einem Zulauf für naszierendes (originäres) Knallgas und einem Zünder, insbesondere einen Piezozünder, zum Entzünden des Knallgases unterhalb des Wasserspiegels oder über dem Wasserspiegel. Das naszierende (originäre) Knallgas wird durch eine Leitung zugeführt, die im Wasser unterhalb des Wasserspiegels endet, sodass das aus einem Ende der Leitung strömende Knallgas Blasen im Wasser bildet, die im Wasser nach oben steigen.

Der erfindungsgemäße Motor, insbesondere für ein Fahrzeug, insbesondere für ein Kraftfahrzeug, umfasst eine erfindungsgemäße Vorrichtung.

Ein Ausführungsbeispiel der Erfindung wird nachstehend anhand der beigefügten Zeichnung im Einzelnen erläutert. In der Zeichnung zeigt
- Fig. 1: eine Vorrichtung zur Erzeugung von Knallgas in einer Seitenansicht,
- Fig. 2: die Vorrichtung gemäß Fig. 1 in einer Draufsicht,
- Fig. 3: eine Vorrichtung zum Entzünden von Knallgas mit einem Zünder,
- Fig. 4: eine Abwandlung der Vorrichtung gemäß Fig. 3 und
- Fig. 5: eine weitere Abwandlung der Vorrichtung gemäß Fig. 3 und 4.

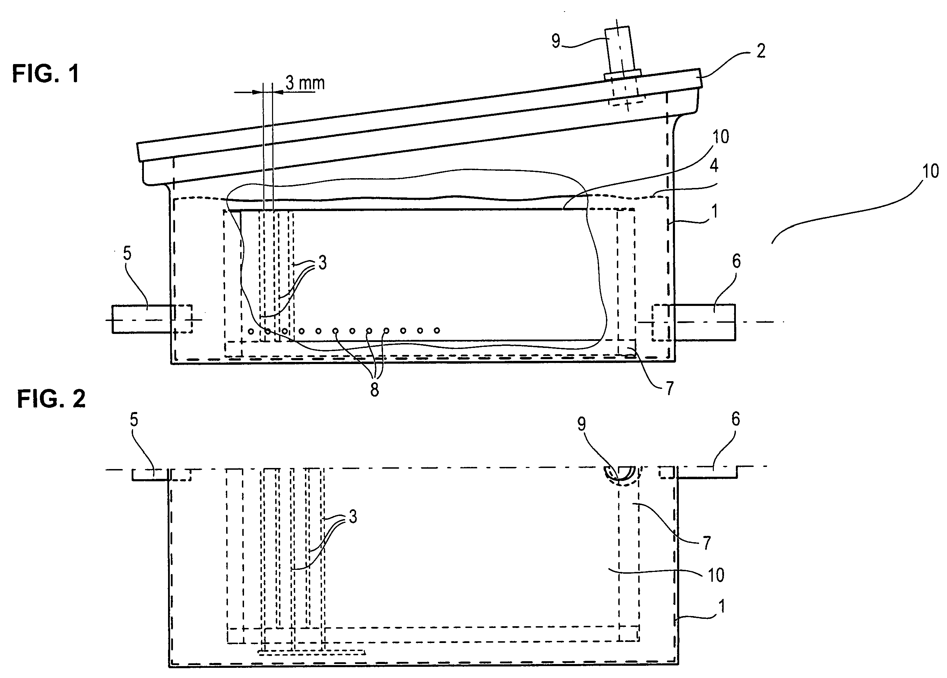

Die in Fig. 1 und 2 dargestellte Vorrichtung zur Erzeugung von Knallgas, die auch als Plattenknallgaserzeuger bezeichnet werden kann, umfasst einen Grundbehälter 1, der im Wesentlichen quaderförmig ist und der oben durch eine Glasplatte 2 verschlossen ist. Der Grundbehälter besteht aus Platten des Materials 1.4301, die dicht miteinander verschweißt sind. Die obere Glasplatte 2 ist mit dem Grundbehälter 1 verschraubt. Zwischen dem oberen Rand des Grundbehälters 1 und der Glasplatte 2 ist als Dichtung ein O-Ring aus PTFE vorgesehen.

In dem Grundbehälter sind vertikale Elektrodenplatten 3 parallel zueinander und im Abstand voneinander angeordnet. Die Elektrodenplatten 3 sind alternierend miteinander verbunden. Sie sind ferner in Mäanderform angeordnet. Der Grundbehälter ist mit Wasser gefüllt, in dem sich ein Ionenaustauscher befindet. Der Wasserstand ist mit 4 bezeichnet. Im Grundbehälter 1 sind ein Wasserzulauf 5 und eine Kabeldurchführung 6 für Sensoren und Elektroden vorgesehen. Auf den Boden des Grundbehälters 1 ist ein Kunststoffeinsatz 7 aus PE oder PTFE zum Halten der Elektrodenplatten aufgesetzt, der mit dem Boden des Grundbehälters verschraubt sein kann. Ferner sind im Bodenbereich des Grundbehälters verschließbare Bohrungen 8 für den Wasseraustausch vorgesehen.

In der Glasplatte 2 befindet sich ein Flansch 9 für die Gasentnahme. Auf das obere Ende des Kunststoffeinsatzes 7 ist eine Abdeckung 10 mit einem Kunststoffgewebe aufgelegt, die den Ionenaustauscher zurückhält.

Die Elektrodenplatten bestehen aus dem Material 1.4301. Sie sind 1 mm dick und im Abstand von 3 mm angeordnet. Die Verbindungen der Elektrodenplatten 3 sind geschweißt. Das Material der Elektrodenplatten 3 kann aus Platin, aus platiniertem Platin oder aus einem platinbeschichteten Grundmaterial bestehen.

Zwischen den Elektrodenplatten 3 befindet sich ein saurer oder alkalischer Ionenaustauscher. Es kann allerdings auch ein Grundmaterial, das mit H⁺ oder OH⁻ in einer Ionenbindung oder van der Waal'schen Bindung steht, Verwendung finden, also ein Material, das durch Konfrontation mit Elektronen oder Protonen die ursprünglich vorhandene Bindung aufgeben muss, somit hochenergetisch wird und damit einen erheblichen Beitrag zur Wasserspaltung liefert. Die normale Spaltungsenergie, die zur Wasserspaltung notwendig ist, kann deshalb wesentlich geringer gehalten werden. Die Eingangsenergie ist somit nur noch eine Wirkenergie (Starterenergie).

Im Betrieb wird dem Grundbehälter durch den Wasserzulauf 5 Wasser zugeführt. Die Zuführung elektrischer Energie zu den Elektrodenplatten 3 erfolgt durch die Kabeldurchführung 6. Das erzeugte Knallgas wird über den Flansch 9 abgezogen.

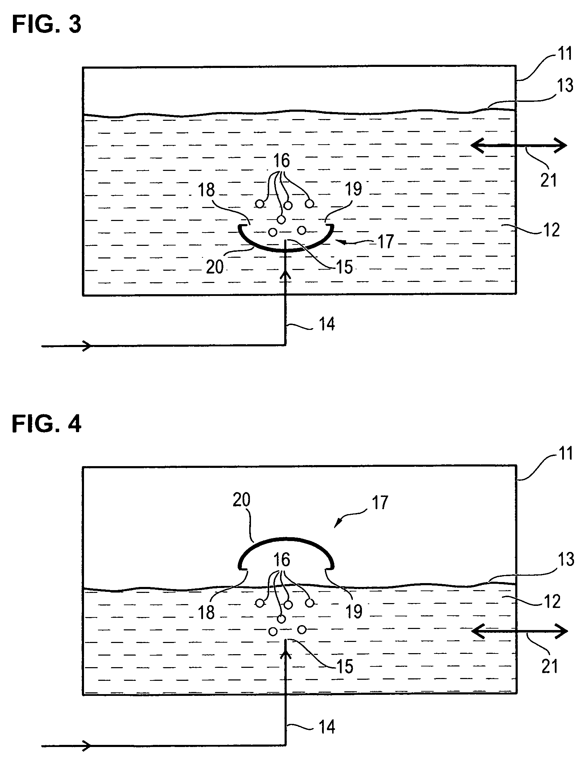

Bei dem durch den Flansch 9 abgezogenen Knallgas handelt es sich um naszierendes Knallgas. Es wird in einen der in Fig. 3 bis 5 gezeigten Behälter geleitet.

In Fig. 3 ist ein explosionsgeschützter Behälter 11 dargestellt, der mit Wasser 12 gefüllt ist, das einen Wasserspiegel 13 ausbildet. Durch eine Leitung 14 wird das aus dem Behälter 1 abgezogene Knallgas in den Behälter 11 geführt. Die Leitung 14 endet im Wasser 12 unterhalb des Wasserspiegels 13. Das aus dem Ende 15 der Leitung 14 strömende Knallgas bildet im Wasser 12 Blasen 16, die im Wasser 12 nach oben steigen. Über dem Ende 15 der Leitung 14 befindet sich ein Piezozünder 17, der das in den Blasen 16 befindliche Knallgas entzündet. Der Piezozünder 17 umfasst zwei einander gegenüberliegende Elektroden 18, 19, die durch einen Bügel 20 miteinander verbunden sind. Das durch den Piezozünder 17 entzündete Knallgas verbrennt oder explodiert und gibt seine Wärme an das umgebende Wasser 12 ab, das dadurch aufgeheizt wird.

Das Verfahren wird in der Weise geführt, dass das Wasser 12 nicht über den Siedepunkt hinaus erhitzt wird. Beispielsweise kann das Wasser 12 auf 80° erhitzt werden. Es ist allerdings auch möglich, durch einen höheren Druck höhere Temperaturen zu erreichen. Das Wasser 12 wird laufend dem Behälter 11 zugeführt und aus diesem abgeführt, wie durch den Doppelpfeil 21 angedeutet.

Die in Fig. 4 gezeigte Ausführungsform unterscheidet sich von derjenigen nach Fig. 3 dadurch, dass der Piezozünder 17 nicht unter, sondern über dem Wasserspiegel 13 angeordnet ist. Der Piezozünder 17 befindet sich oberhalb des Endes 15 der Leitung 14. Über dem Wasserspiegel 13 öffnen sich die Blasen 16, und das darin befindliche Knallgas steigt weiter nach oben. Es gelangt in den Bereich zwischen den Elektroden 18, 19 des Piezozünders 13, wo es entzündet wird. Auf diese Weise zündet der Piezozünder 17 das Knallgas, das sich über dem Wasserspiegel 13 befindet. Die dadurch entstandene Wärme wird auf das Wasser 12 übertragen. Das Wasser 12 wird laufend dem Behälter 11 zugeführt und aus diesem abgeführt, wie aus dem Doppelpfeil 21 ersichtlich. Auf diese Weise kann die dem Wasser 12 zugeführte Wärme abtransportiert und außerhalb des Behälters 11 genutzt werden.

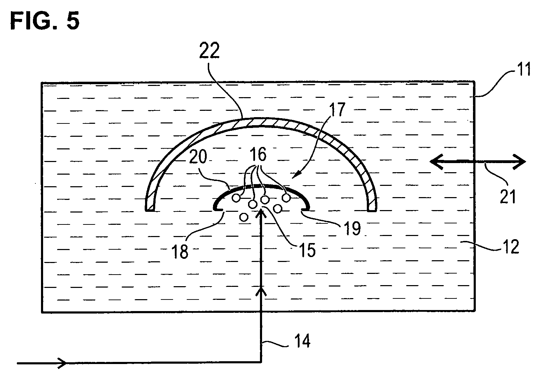

Bei der Abwandlung nach Fig. 5 ist der Piezozünder 17 unter dem Wasserspiegel 13 angeordnet. Er wird von einem Dom 22 überwölbt, der oben geschlossen und unten offen ist und in den die Knallgas-Blasen 16 aufsteigen. Der Piezozünder 17 befindet sich im Bereich des Endes 15 der Leitung 14. Der Dom 22 ist flächig ausgestaltet und überwölbt den Piezozünder 17 nach Art einer umgedrehten Wanne.

Gemäß der Erfindung besteht sowohl die Möglichkeit, das Knallgas zunächst aus dem Behälter, in dem es erzeugt wird, abzuziehen, beispielsweise mittels einer Vakuumpumpe, und in einen von Wasser durchströmten explosionsgesicherten Behälter 11 zu leiten. Dieser Behälter 11 kann kontinuierlich oder diskontinuierlich von Wasser durchströmt werden. Das Knallgas kann dann mittels Zündung entweder über dem Wasserspiegel oder unter Wasser zur Explosion oder Verbrennung gebracht werden. Bei einer Zündung und Verbrennung oder Explosion unter Wasser ist auf die Größe der Blasen und auf die Blasenhäufigkeit hinsichtlich ihrer Entstehung und hinsichtlich ihrer Zündung bzw. Verbrennung bzw. Explosion zu achten. Es ist auch möglich, das Knallgas in einem unter Wasser befindlichen Dom 18 verbrennen oder explodieren zu lassen.

Eine weitere Möglichkeit gemäß der Erfindung besteht darin, das Knallgas in dem Behälter zu verbrennen oder explodieren zu lassen, in dem es erzeugt wird. Insbesondere kann das Verfahren in der Weise geführt werden, dass zunächst Wasserstoff und Sauerstoff getrennt werden und anschließend kontrolliert verbrannt oder zur Explosion gebracht werden.

Das Knallgas könnte durch eine Membran in Wasserstoff und Sauerstoff getrennt werden, so dass nur Wasserstoff verbrennt. Der Sauerstoff könnte einer weiteren Verwendung zugeführt werden. Ein gewisser Anteil von Sauerstoff ist allerdings für die Verbrennung des Wasserstoffes nötig.

## Patentansprüche

1. Verfahren zur Freisetzung des Energieinhaltes von Knallgas,
**dadurch gekennzeichnet,**
**dass** das Knallgas als naszierendes, d.h. originäres Knallgas in einen mit Wasser (12), das einen Wasserspiegel (13) ausbildet, gefüllten, explosionsgeschützten Behälter (11) durch eine Leitung (14), die im Wasser (12) unterhalb des Wasserspiegels (13) derart endet, dass das aus einem Ende (15) der Leitung (14) strömende Knallgas Blasen (16) im Wasser (12) bildet, die im Wasser (12) nach oben steigen, geführt und unterhalb des Wasserspiegels (13) oder über dem Wasserspiegel (13) entzündet (17) wird.

2. Verfahren nach Anspruch 1, **dadurch gekennzeichnet, dass** die Entzündung durch eine Funkenstrecke erfolgt.

3. Verfahren nach Anspruch 1 oder 2, **dadurch gekennzeichnet, dass** die Entzündung durch einen Piezozünder (17) erfolgt.

4. Verfahren nach einem der vorhergehenden Ansprüche, **dadurch gekennzeichnet, dass** das Knallgas dadurch erzeugt wird, dass eine Flüssigkeit elektrolytisch behandelt wird.

5. Verfahren nach Anspruch 4, **dadurch gekennzeichnet, dass** in der Flüssigkeit, insbesondere Wasser (12), ein Ionenaustauscher vorhanden ist, dem das oder eines der herzustellenden Gase, insbesondere Wasserstoff und/oder Sauerstoff, anhaftet.

6. Vorrichtung zur Durchführung des Verfahrens nach einem der vorhergehenden Ansprüche, umfassend:
einen mit Wasser (12), das einen Wasserspiegel (13) ausbildet, gefüllten, explosionsgeschützten Behälter (11),
eine Leitung (14) zur Zufuhr von naszierendem, d.h. originären Knallgas, die im Wasser (12) unterhalb des Wasserspiegels (13) endet, sodass das aus einem Ende (15) der Leitung (14) strömende Knallgas Blasen (16) im Wasser (12) bildet, die im Wasser (12) nach oben steigen,
und einen Zünder (17), insbesondere einen Piezozünder (17), zum Entzünden des Knallgases unterhalb des Wasserspiegels (13) oder über dem Wasserspiegel.

7. Motor, insbesondere für ein Fahrzeug, insbesondere für ein Kraftfahrzeug, **gekennzeichnet durch** eine Vorrichtung nach Anspruch 6.

## Claims

1. A method for releasing the energy content of explosive gas,
**characterised in that**
the explosive gas is conducted as nascent, i.e. original, explosive gas into an explosion-proof container (11) filled with water (12) which forms a water level (13) through a line (14) which ends in the water (12) beneath the water level (13) such that the explosive gas flowing out of an end (15) of the line (14) forms bubbles (16) in the water (12) which float upwards in the water (12), and said explosive gas is ignited (17) beneath the water level (13) or above the water level (13).

2. A method in accordance with claim 1, **characterised in that** the ignition takes place by a spark gap.

3. A method in accordance with claim 1 or claim 2, **characterised in that** the ignition takes place by a piezo igniter (17).

4. A method in accordance with one of the preceding claims, **characterised in that** the explosive gas is produced **in that** a liquid is treated electrolytically.

5. A method in accordance with claim 4, **characterised in that** an ion exchanger is present in the liquid, in particular water (12), to which the or one of the gases to be produced, in particular hydrogen and/or oxygen, adheres.

6. An apparatus for carrying out the method in accordance with one of the preceding claims, comprising:
an explosion-proof container (11) filled with water (12) which forms a water level (13);
a line (14) for the supply of nascent, i.e. original, explosive gas, the line ending in the water (12) beneath the water level (13) so that the explosive gas flowing out of an end (15) of the line (14) forms bubbles (16) in the water (12) which float upwards in the water (12);
and an igniter (17), in particular a Piezo igniter (17), for igniting the explosive gas beneath the water level (13) or above the water level.

7. An engine, in particular for a vehicle, in particular for a motor vehicle, **characterised by** an apparatus in accordance with claim 6.

## Revendications

1. Procédé de libération du contenu énergétique de gaz détonant,
**caractérisé en ce que**
le gaz détonant est guidé en tant que gaz détonant naissant, c'est-à-dire original, dans un réservoir (11) antidéflagrant rempli d'eau (12), qui forme un niveau d'eau (13), par une conduite (14) qui se termine dans l'eau (12) en dessous du niveau d'eau (13) de telle manière que le gaz détonant s'écoulant d'une extrémité (15) de la conduite (14) forme des bulles (16) dans l'eau (12) qui montent dans l'eau (12), et allumé (17) en dessous du niveau d'eau (13) ou au-dessus du niveau d'eau (13).

2. Procédé selon la revendication 1, **caractérisé en ce que** l'allumage se fait par un éclateur.

3. Procédé selon la revendication 1 ou 2, **caractérisé en ce que** l'allumage se fait par un allumeur piézoélectrique (17).

4. Procédé selon l'une des revendications précédentes, **caractérisé en ce que** le gaz détonant est généré par le traitement électrolytique d'un liquide.

5. Procédé selon la revendication 4, **caractérisé en ce que**, dans le liquide, en particulier de l'eau (12), se trouve un échangeur d'ions, auquel le ou l'un des gaz à produire, en particulier de l'hydrogène et/ou de l'oxygène, se fixe.

6. Dispositif destiné à exécuter le procédé selon l'une des revendications précédentes, comprenant :
un réservoir (11) antidéflagrant rempli d'eau (12) qui forme un niveau d'eau (13),
une conduite (14) destinée à amener du gaz détonant naissant, c'est-à-dire original, qui se termine dans l'eau (12) en dessous du niveau d'eau (13), de telle sorte que le gaz détonant s'écoulant d'une extrémité (15) de la conduite (14) forme des bulles (16) dans l'eau (12), qui montent dans l'eau (12),
et un allumeur (17), en particulier un allumeur piézoélectrique (17), destiné à allumer le gaz détonant en dessous du niveau d'eau (13) ou au-dessus du niveau d'eau.

7. Moteur, en particulier pour un véhicule, en particulier pour un véhicule automobile, **caractérisé par** un dispositif selon la revendication 6.
